# EUROPÄISCHE PATENTANMELDUNG

(11) **EP 4 825 713 A1**
(43) Veröffentlichungstag der Anmeldung: **21.10.2026**
(21) Anmeldenummer: 26172686.3
(22) Anmeldetag: 16.04.2026
(51) Int. Cl.: B62J 1/28

(54) **EINSTELLLEHRE UND EINSTELLSYSTEM FÜR EINEN FAHRRADSATTEL, SOWIE FAHRRADSATTEL UND FAHRRAD**

(30) Priorität: 17.04.2025 DE 202025102145 U
(71) Anmelder: Ergon International GmbH, 56070 Koblenz (DE)
(72) Erfinder: WENZEL, Maxim, 40878 Ratingen (DE); TOFAUTE, Dr. Kim Alexander, 56414 Niederahr (DE)
(74) Vertreter: dompatent

(57) **Zusammenfassung**

Die Erfindung betrifft eine Einstelllehre (10) für einen Fahrradsattel (100), mit einer Schablone (12) zur definierten Verbindung mit dem Fahrradsattel (100), wobei die Schablone (12) eine Grundfläche (14) zur Auflage auf die Sitzfläche des Fahrradsattels (100), und mit einer Unterseite der Grundfläche (14) verbundene Seitenwände zur beidseitigen äußeren Anlage an die Fahrradsattelseiten (108) aufweist; und wobei die Einstelllehre (10) eine Erfassungsvorrichtung zur Erfassung der Position des Fahrradsattels (100) aufweist.

## Beschreibung

Die Erfindung betrifft eine Einstelllehre und ein Einstellsystem für einen Fahrradsattel, sowie einen Fahrradsattel und ein Fahrrad.

Die richtige Sattelleinstellung bei Fahrrädern ist aus mehreren wichtigen Gründen entscheidend für den Komfort, die Effizienz und die Gesundheit des Radfahrers. Problematisch dabei ist, dass mehrere, oft stufenlose, Einstellmöglichkeiten des Fahrradsattels bestehen, sodass eine korrekte Einstellung schwierig ist.

Folgende Einstellmöglichkeiten existieren beispielsweise: Die Sattelhöhe wird durch das Verschieben der Sattelstütze nach oben oder unten eingestellt; sie beeinflusst die Beinstreckung und die Kniebelastung. Die Sattelneigung betrifft die Kippbewegung der Satteloberfläche, insbesondere nach oben und unten, wobei generell eine präzise Einstellung gewünscht und meist eine horizontale Ausrichtung optimal ist; sie wirkt sich auf den Druck im Damm- und Beckenbereich aus. Der Sattelnachsitz wird durch Vor- oder Zurückschieben des Sattels, insbesondere in einer Sattelschiene, eingestellt; er beeinflusst die Haltung des Oberkörpers und die Knieposition. Die Sattelneigung und der Sattelnachsitz sind darüber hinaus für die Beckenkippung verantwortlich. Die Sattelrotation beschreibt die seitliche Verdrehung des Sattels; sie wirkt sich auf die gleichmäßige Belastung der Sitzknochen aus.

Aufgabe der Erfindung ist es, die Fahrradsatteleinstellung zu optimieren, insbesondere zu vereinfachen.

Die Lösung der Aufgabe erfolgt erfindungsgemäß durch ein Einstelllehre für einen Fahrradsattel gemäß Anspruch 1, ein Einstellsystem für einen Fahrradsattel gemäß Anspruch 18, einen Fahrradsattel gemäß Anspruch 20 und ein Fahrrad gemäß Anspruch 21.

Die erfindungsgemäße Einstelllehre für einen Fahrradsattel weist eine Schablone zur definierten, insbesondere formschlüssigen, Verbindung der Einstelllehre mit dem Fahrradsattel auf. Die Schablone weist eine Grundfläche zur Auflage, insbesondere mit einer Unterseite der Grundfläche, auf der Sitzfläche des Fahrradsattels auf. Es ist bevorzugt, dass die Unterseite eine Negativform der Oberseite des Fahrradsattels aufweist. Mit der Unterseite der Grundfläche sind, insbesondere einstückig, Seitenwände zur beidseitigen äußeren Anlage an die Fahrradsattelseiten verbunden. Insbesondere sind die Seitenwände rechtwinkelig mit der Unterseite der Grundfläche verbunden. Ferner weist die Einstelllehre mindestens eine Erfassungsvorrichtung zur Erfassung der Position des Fahrradsattels auf. Die Schablone ist vorzugsweise zum Aufschieben und/oder Aufsetzen auf den Fahrradsattel ausgebildet. Bevorzugt sind die Seitenwände derart ausgeführt, dass sie bei einem Aufschieben der Schablone von vorne, also ausgehend von der Sattelnase, beidseitig an den zum Sattelhinterteil breiter werdenden Sattelseiten anschlagen und ein weiteres Aufschieben verhindern. Durch den Anschlag kommt es zur definierten Verbindung der Einstellehre mit dem Sattel. Es ist daher bevorzugt, dass sich die Schablone, insbesondere die Einstelllehre, in dieser, in Anschlag gebrachten Position, in einer definierten Einstellposition zur Einstellung des Fahrradsattels befindet. Ausgehend von dieser Einstellposition können insbesondere Messungen relativ zum Sattel und/oder Einstellungen des Sattels vorgenommen werden. Vorzugsweise entspricht eine Längsrichtung der Einstelllehre der Längsrichtung des Sattels. Die Oberseite der Grundfläche ist insbesondere eben und/oder horizontal ausgeführt, insbesondere wenn die Einstelllehre mit dem Sattel verbunden ist. Die Erfassungsvorrichtung kann insbesondere einstückig mit der Schablone ausgeführt sein.

Es ist bevorzugt, dass die Erfassungsvorrichtung eine Referenzmarkierung und/oder eine Messvorrichtung und/oder eine Ausrichtungsvorrichtung aufweist. Bei der Messvorrichtung kann es sich z. B. um ein Längenmessgerät, wie ein Maßband, handeln. Bei der Ausrichtungsvorrichtung kann es sich z. B. um ein Lot, einen Laser oder eine Wasserwaage handeln. Möglich ist es insbesondere, dass die Erfassungsvorrichtung mehrere aus Referenzmarkierung, Messvorrichtung, und Ausrichtungsvorrichtung aufweist.

Es ist bevorzugt, dass zwischen der Unterseite der Grundfläche und den Seitenwänden ein Aufnahmeraum zum formschlüssigen Aufschieben der Schablone auf den Fahrradsattel ausgebildet ist. Der Aufnahmeraum ist insbesondere in einer Längsrichtung beidseitig offen und in einer Querrichtung durch die beiden Seitenwände begrenzt. Insbesondere ist der Aufnahmeraum zum Aufschieben von vorne und/oder von oben auf den Fahrradsattel ausgebildet. Bevorzugt kommt beim Aufschieben der Aufnahmeraum, insbesondere die Seitenwände, in Anschlag mit der nach hinten zunehmenden Breite der Fahrradsattelseiten. Durch das formschlüssige Aufschieben kommt es vorzugsweise zu der definierten Verbindung der Einstelllehre, insbesondere der Schablone, mit dem Sattel, sodass die definierte Einstellposition vorliegt. In der Einstellposition weist die Einstelllehre insbesondere eine ebene Oberseite auf und/oder die Längsrichtung der Einstelllehre entspricht der Längsrichtung des Fahrradsattels.

Es ist bevorzugt, dass die Schablone, insbesondere die Grundfläche, eine sich verjüngende Form, aufweist. Vorzugsweise weist die Schablone, insbesondere die Grundfläche, eine Keilform auf, wobei es bevorzugt ist, dass die Keilform im Bereich der Verjüngung eine Rundung, eine Spitze oder einen Stumpf aufweist. Im Bereich gegenüber der Verjüngung weist die Schablone, insbesondere die Grundfläche, vorzugsweise einen Vorsprung auf.

Es ist bevorzugt, dass die Seitenwände einen Abstand von 50 mm bis 100 mm, bevorzugt von 65 mm bis 85 mm, besonders bevorzugt von ca. 75 mm zueinander aufweisen.

Es ist bevorzugt, dass der Abstand der Seitenwände, insbesondere variabel, verstellbar ist. Möglich ist es z. B. dass die Seitenwände mit der Grundfläche über eine Führung verschiebbar zur Veränderung des Abstands zueinander verbunden sind. Vorzugsweise ist der Abstand der Seitenwände fixierbar. Bspw. sind die Seitenwände in einem Abstandsbereich von 50 mm bis 100 mm, bevorzugt von 65 mm bis 85 mm, besonders bevorzugt von ca. 75 mm zueinander verstellbar.

Es ist bevorzugt, dass die Einstelllehre eine Peilvorrichtung, z. B. Kimme und Korn, zum Anpeilen eines Fixpunkts, vorzugsweise des Fahrradlenkers und/oder des Gabelschafts aufweist. Die Peilvorrichtung ist insbesondere ausgebildet, um durch die Anpeilung des Fixpunkts die Sattelrotation einzustellen. Bei der Peilvorrichtung kann es sich z. B. um ein Visier zum optischen Anpeilen, insbesondere mittels Blickpeilung, des Fixpunkts handeln. Die Peilvorrichtung ist vorzugsweise in Längsrichtung der Einstelllehre und/oder in Längsrichtung des Sattels angeordnet. Bevorzugt ist die Peilvorrichtung einstückig mit der Schablone ausgeführt. Die Peilvorrichtung kann bevorzugt eine Kimme, insbesondere ausgeführt als Einbuchtung, z. B. in einem Vorsprung auf der Schablone, und/oder ein Korn, insbesondere ausgeführt als Vorsprung auf der Schablone, aufweisen. Alternativ oder zusätzlich kann es sich bei der Peilvorrichtung um eine Führungsvorrichtung für ein Peilgerät, bevorzugt eine Schnur, besonders bevorzugt eine Lotschnur handeln. Die Führungsvorrichtung weist bevorzugt mindestens eine Führungsaufnahme zum, insbesondere geradlinigen, Führen des Peilgeräts, insbesondere der Lotschnur, auf. Bevorzugt ist die Führungsaufnahme mittig und/oder in Längsrichtung der Einstelllehre angeordnet. Die Führungsaufnahme ist insbesondere als Nuten, bevorzugt mit der Schablone, besonders bevorzugt der Oberseite der Grundfläche, verbunden, ausgeführt. Es ist bevorzugt, dass die Führungsaufnahme in mindestens einem Vorsprung auf der Schablone, besonders bevorzugt auf der Oberseite der Grundfläche, angeordnet ist, sodass ein Führen der Schnur durch die Führungsaufnahmen über die Oberseite umgesetzt ist. Die Führungsaufnahme kann auch als Vorsprung ausgebildet sein, sodass bspw. die Schnur an dem Vorsprung zur Führung entlang oder darüber führbar ist. Der mindestens eine Vorsprung kann bspw. zur Peilung, insbesondere als Korn, und/oder als Führungsaufnahmen genutzt werden. Die Nut der Führungsaufnahme und/oder die Einbuchtung der Kimme kann vorzugsweise als ein gemeinsames Element, insbesondere in einem Vorsprung auf der Schablone, ausgeführt sein. Die Peilvorrichtung, insbesondere die Führungsvorrichtung, ist vorzugsweise zum geradlinigen Peilen in Längsrichtung des Sattels ausgeführt.

Es ist bevorzugt, dass die Einstelllehre, insbesondere die Schablone, eine Aufnahme und/oder einen Auflageumriss für eine Wasserwaage aufweist. Die Aufnahme ist vorzugsweise in Längsrichtung der Einstelllehre und/oder in Längsrichtung des Sattels angeordnet. Bevorzugt ist die Aufnahme einstückig mit der Schablone ausgeführt. Es ist bevorzugt, dass die Aufnahme auf der Oberseite der Grundfläche angeordnet ist. Bei der Aufnahme handelt es sich z. B. um eine Aussparung zur, vorzugsweise passgenauen, Aufnahme der Wasserwaage. Vorzugsweise ist die Aufnahme derart ausgeführt, dass über die aufgenommene Wasserwaage die Sattelneigung einstellbar ist. Alternativ oder zusätzlich zur Aufnahme kann die Einstelllehre eine integrierte Wasserwaage, aufweisen. Durch den Auflageumriss kann insbesondere die optimale Positionierung der Wasserwaage vorgenommen werden.

Es ist bevorzugt, dass die Einstelllehre, insbesondere die Schablone, eine Lotfixierung zur Befestigung eines Lots aufweist. Die Lotfixierung ist vorzugsweise im Bereich der Verjüngung und/oder an dem Vorsprung angeordnet. Bei der Lotfixierung kann es sich z. B. um eine Nut oder einen Schlitz zur Aufnahme des Lots handeln. Die Lotfixierung ist vorzugsweise in Querrichtung der Einstelllehre und/oder in Querrichtung des Sattels angeordnet. Bevorzugt ist die Aufnahme einstückig mit der Schablone ausgeführt. Die Lotfixierung ist insbesondere ausgeführt, um mit dem Lot den Sattelnachsitz einzustellen. Vorzugsweise ist die Lotfixierung derart an der Einstellehre angeordnet, dass ein mit der Lotfixierung verbundenes Lot in den Bereich des Tretlagers pendelt. Möglich ist es z. B., dass das Lot Teil der Einstelllehre ist und somit fest mit der Einstelllehre verbunden ist; oder alternativ abnehmbar ist.

Es ist bevorzugt, dass die Einstelllehre, insbesondere die Schablone, einen Höhenmesspunkt zum Messen der Sattelhöhe aufweist. Vorzugsweise ist der Höhenmesspunkt im Wesentlichen deckungsgleich mit der Satteloberseite, wenn die Einstelllehre mit dem Sattel verbunden ist. Der Höhemesspunkt ist insbesondere deckungsgleich mit der Unterseite der Grundfläche. Bevorzugt ist der Höhenmesspunkt an einer oder an beiden Seitenwänden angeordnet. Der Höhenmesspunkt entspricht insbesondere eine Markierung an der Einstellehre. Die Einstellehre ist vorzugsweise derart umgesetzt, sodass die Höhenmessung an einer bevorzugten BMR-Markierung erfolgt, um die optimale Sattelhöhe im Verhältnis zum biomechanischen Drehpunkt zu bestimmen.

Es ist bevorzugt, dass die Einstelllehre, z. B. die Schablone, insbesondere einstückig damit ausgeführt, eine Messfixierung zur Fixierung eines Längenmessgeräts, insbesondere eines Maßbands, aufweist. Die Messfixierung ist insbesondere zur Fixierung des Gehäuses und/oder zur Fixierung des Endhakens des Maßbands ausgeführt. Bevorzugt weist die Messfixierung eine Aussparung zur Aufnahme des Gehäuses des Maßbands und/oder eine Kante oder einen Schlitz zur Aufnahme des Endhakens des Maßbands auf. Die Messfixierung ist insbesondere derart angeordnet, dass das Längenmessgerät darin zum Messen der Sattelhöhe geführt wird. Beispielsweise ist die Messfixierung derart angeordnet, dass das Längenmessgerät darin entlang des Höhemesspunkts geführt wird. Vorzugsweise ist die Messfixierung seitlich an der Einstelllehre, insbesondere der Schablone, angeordnet. Möglich ist es z. B., dass das Längenmessgerät Teil der Einstelllehre ist und somit fest mit der Einstelllehre verbunden ist. Anstelle oder zusätzlich zur Messfixierung kann die Einstelllehre, z. B. die Schablone, insbesondere einstückig damit ausgeführt, eine Messanlage zur, bevorzugt definierten, Anlage eines Längenmessgeräts, insbesondere eines Zollstocks, aufweisen. Bei der Anlage handelt es sich bspw. um eine Hilfskante, die in Messrichtung an einem Messpunkt integriert ist, um eine präzise Führung des Messmittels zu erzielen.

Es ist bevorzugt, dass die Einstelllehre mindestens eine Referenzmarkierung, bevorzugt eine Referenzlinie und/oder einen Referenzpunkt aufweist. Bei der Referenzmarkierung handelt es sich insbesondere eine BMR-Markierung, bspw. eine BMR-Linie oder einen BMR-Punkt. Vorzugsweise ist eine Referenz-markierung an der Oberseite der Grundfläche und/oder ist eine Referenzmarkierung an mindestens einer der Seitenwände angeordnet. Bei der BMR-Markierung handelt es sich um eine Biomechanische Referenz-Markierung, bevorzugt nach dem Standard BMR70 oder BMR 80, besonders bevorzugt nach BMR75. Die Referenzmarkierung entspricht insbesondere eine Markierung an der Einstellehre. Die bevorzugte Veränderbarkeit des Abstands der Seitenwände ist insbesondere derart umgesetzt, dass hierdurch die BMR, insbesondere innerhalb der Standards änderbar ist. Bspw. kann bevorzugt umgesetzt sein, dass die Seitenwände zwischen einem Abstand von 70 mm für BMR70 bis 80 mm für BMR80, insbesondere über den Abstand von 75 mm für BMR75 stufenlos oder in Stufen, bspw. von 70 mm, 75 mm und 80 mm verstellbar sind.

Es ist bevorzugt, dass die Schablone, insbesondere die Grundfläche und/oder mindestens eine Seitenwand ein Markierungsfenster aufweist. Bei dem Markierungsfenster handelt es sich vorzugsweise um eine Öffnung in der Schablone. Das Markierungsfenster ist insbesondere zu definierten Anbringung einer Markierung auf dem Fahrradsattel ausgeführt. Im Bereich des Markierungsfensters, bspw. daneben, ist vorzugsweise eine Referenzmarkierung, bevorzugt eine BMR-Linie, z. B. nach Standard BMR70, BMR75 oder BMR 80, angeordnet. Somit ist es insbesondere möglich, dass durch das Markierungsfenster eine BMR-Linie auf den Fahrradsattel übertragen werden kann. Die Erfassungsvorrichtung weist vorzugsweise die Referenzlinien, den Höhenmesspunkt, die Messfixierung, die Lotfixierung, die Aufnahme und/oder die Peilvorrichtung auf, besteht bevorzugt daraus.

Es ist bevorzugt, dass eine Unterseite der Schablone, insbesondere der Grundfläche, mindestens eine Stufe aufweist, vorzugsweise derart, dass der Bereich der Verjüngung eine geringere Höhe aufweist als der gegenüberliegende Bereich. Vorzugsweise weist der Vorsprung eine geringere Höhe als der angrenzende Bereich auf. Insbesondere kann der Vorsprung über eine Stufe mit der übrigen Grundfläche verbunden sein, sodass sich der Höhenunterschied ergibt. Durch die mindestens eine Stufe kann insbesondere eine unebene Satteloberfläche ausgeglichen werden. Die mindestens eine Stufe ist z. B. mit einer schrägen Stufenkante ausgeführt. Besonders bevorzugt ist es, dass die Unterseite der Grundfläche eine Basisfläche zur Anlage an die Satteloberseite aufweist. Die Basisfläche entspricht insbesondere dem Bereich der Unterseite an dem die Grundfläche die größte Höhe aufweist. Die Basisfläche liegt insbesondere außerhalb der Verjüngung, vorzugsweise des Endbereichs der Verjüngung und/oder außerhalb des Vorsprungs. Die Basisfläche weist insbesondere eine Länge von 120 mm bis 80 mm, bevorzugt von ca. 100 mm auf. Es ist bevorzugt, dass sich die Basisfläche in Längsrichtung ausgehend von der Position der BMR-Linie um ca. 80 mm in Richtung der Sattelnase bzw. der Verjüngung; und/oder um ca. 20 mm in Richtung des Sattelhecks bzw. des Vorsprungs erstreckt. Es ist somit bevorzugt, dass ausgehend von der BMR-Linie in ca. 80 mm in Richtung der Sattelnase die Stufe der Verjüngung und/oder in ca. 20 mm in Richtung des Sattelhecks die Stufe des Vorsprungs beginnt.

Möglich ist es, dass die Einstelllehre Zeichen, bspw. Symbole, zum Angeben des Messinstruments zum Messen an der jeweiligen Position der Einstelllehre aufweist. Es ist bevorzugt, dass die Einstelllehre, insbesondere die Schablone, eine Länge von 200 mm bis 120 mm, bevorzugt von 180 mm bis 140 mm, besonders bevorzugt von ca. 150 mm aufweist.

Es ist bevorzugt, dass die Einstelllehre, insbesondere die Schablone, eine Breite von 150 mm bis 90 mm, bevorzugt von 130 mm bis 100 mm, besonders bevorzugt von ca. 100 mm aufweist.

Es ist bevorzugt, dass die Einstelllehre, insbesondere die Schablone und die Seitenwände, eine Höhe von 60 mm bis 30 mm, bevorzugt 45 mm bis 30 mm, besonders bevorzugt von ca. 35 mm aufweist.

Es ist bevorzugt, dass die Einstelllehre aus Kunststoff hergestellt ist. Die Einstelllehre ist insbesondere formstabil. Die Einstellehre kann z. B. mittel Spritzguss oder 3D-Druck hergestellt sein.

Die Erfindung betrifft ferner ein Einstellsystem für einen Fahrradsattel, mit einer erfindungsgemäßen Einstelllehre, und mindestens einem mit der Einstelllehre verbundenem Messinstrument. Bevorzugt ist das mindestens eine Messinstrument lösbar mit der Einstelllehre verbunden oder mit der Einstelllehre integriert, insbesondere unlösbar, verbunden.

Es ist bevorzugt, dass als Messinstrument mit der Einstelllehre ein Maßband, eine Wasserwaage, ein Lot und/oder ein Laser, insbesondere ein Laser-Distanzmesser und/oder ein Linienlaser, z. B. ein Kreuzlinienlaser, verbunden ist.

Die Erfindung betrifft ferner ein Fahrradsattelsystem mit einem Fahrradsattel und einem erfindungsgemäßen Einstellsystem, wobei die Einstelllehre formschlüssig mit dem Fahrradsattel verbunden ist. Insbesondere sind die Seitenwände mit den Sattelseiten in Anschlag gebracht und die Grundfläche liegt eben auf der Satteloberseite auf.

Die Erfindung betrifft ferner ein Fahrradsystem mit einem Fahrrad und einem mit dem Fahrrad verbundenen erfindungsgemäßen Fahrradsattelsystem, wobei mindestens ein mit der Einstelllehre verbundenes Messinstrument eingerichtet ist, die Position des Fahrradsattels relativ zum Fahrrad zu erfassen. Das mit der Einstellehre verbundene Messinstrument ist insbesondere eingerichtet und/oder angeordnet, um die Ausrichtung des Fahrradsattels relativ zum Fahrrad, insbesondere zum Lenker, anzuzeigen, vorzugsweise sodass hierdurch die Sattelrotation einstellbar ist. Bei diesem Messinstrument handelt es sich z. B. um eine Lotschnur und/oder einen Linienlaser. Alternativ oder zusätzlich ist das mit der Einstellehre verbundene Messinstrument insbesondere eingerichtet und/oder angeordnet, um den, vorzugsweise direkten, Abstand des Fahrradsattels zum Tretlager zu messen, insbesondere sodass hierdurch die Sattelhöhe einstellbar ist. Bei diesem Messinstrument handelt es sich z. B. um ein Maßband. Alternativ oder zusätzlich ist das mit der Einstellehre verbundene Messinstrument insbesondere eingerichtet und/oder angeordnet, um den horizontalen Abstand, insbesondere in Längsrichtung des Fahrrads, des Sattels zum Tretlager anzuzeigen und/oder zu messen, vorzugsweise sodass hierdurch der Nachsitz einstellbar ist. Bei diesem Messinstrument handelt es sich z. B. um ein Lot und/oder einen Linienlaser. Alternativ oder zusätzlich ist das mit der Einstellehre verbundene Messinstrument insbesondere eingerichtet und/oder angeordnet, um die horizontale Ausrichtung des Fahrradsattels zu erfassen, vorzugsweise sodass hierdurch die Sattelneigung einstellbar ist. Bei diesem Messinstrument handelt es sich z. B. um eine Wasserwaage. Alternativ oder zusätzlich ist das mit der Einstellehre verbundene Messinstrument insbesondere eingerichtet und/oder angeordnet, um den, vorzugsweise direkten, Abstand des Fahrradsattels zum Lenker zu messen, bevorzugt sodass hierdurch der Lenkerabstand einstellbar ist. Bei diesem Messinstrument handelt es sich z. B. um ein Maßband.

Nachfolgend wird die Erfindung anhand bevorzugter Ausführungsformen unter Bezugnahme auf die anliegenden Zeichnungen näher erläutert.

Es zeigen:
- Fig. 1: eine perspektivische Ansicht einer Ausführungsform einer erfindungsgemäßen Einstelllehre,
- Fig. 2: die Einstelllehre aus Fig. 1 in einer Draufsicht,
- Fig. 3: die Einstelllehre aus Fig. 1 in einer Seitenansicht,
- Fig. 4: eine perspektivische Ansicht einer Ausführungsform eines erfindungsgemäßen Fahrradsattelsystems mit der Einstelllehre aus Fig. 1.

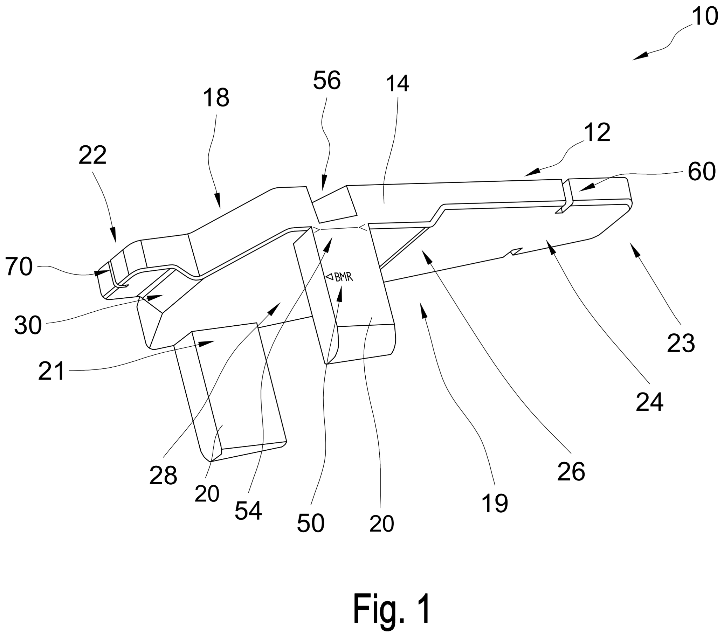

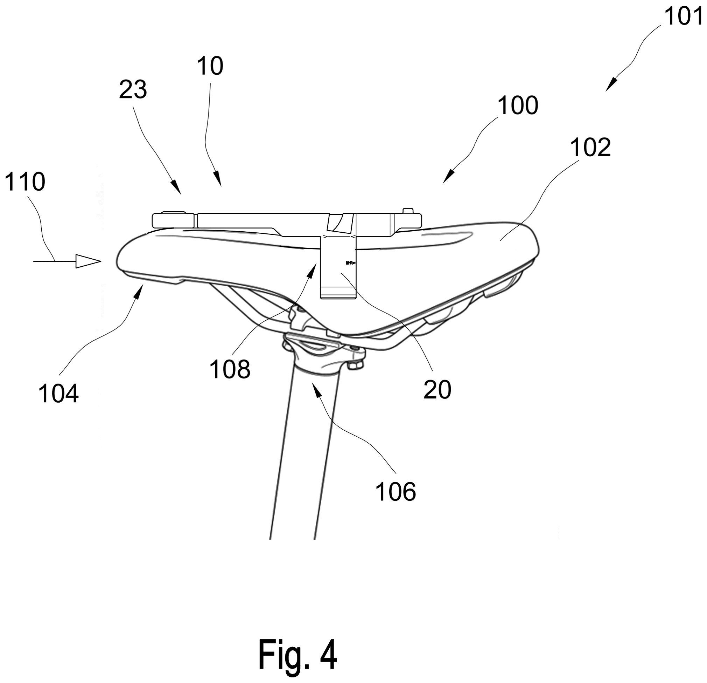

Figuren 1-3 zeigen eine Einstelllehre 10 für einen Fahrradsattel 100 (vgl. Fig. 4).

Die Einstelllehre 10 weist eine Schablone 12 zur definierten Verbindung der Einstelllehre 10 mit dem Fahrradsattel 100 auf. Die Schablone 12 weist eine Grundfläche 14 zur Auflage auf die Sitzfläche 102 des Fahrradsattels 100 (vgl. Fig. 4), und mit einer Unterseite 19 der Grundfläche 14 verbundene Seitenwände 20 zur beidseitigen äußeren Anlage an die Fahrradsattelseiten 108 auf. Bei einem Aufschieben der Einstelllehre 10 auf den Fahrradsattel 100 von vorn (entgegen der Fahrrichtung; Pfeil 110 in Fig. 4 zeigt die Aufschiebrichtung), schlagen die Seitenwände 20 beidseitig an die nach hinten zunehmenden Sattelseiten 108 an. Ferner liegt die Unterseite 19 auf der Sitzfläche 102 des Sattels 100 auf. Der zwischen Unterseite 19 und Seitenwänden 20 gebildete Aufnahmeraum 21 ist somit formschlüssig mit dem Sattel 100 verbunden, sodass es zu einer definierten Verbindung zwischen Einstelllehre 10 und Fahrradsattel 100 kommt. In dieser Position (vgl. Fig. 4) befindet sich die Einstelllehre 10 in einer Einstellposition, sodass ein definiertes Messen und/oder Einstellen des Fahrradsattel 100 möglich ist. Die Seitenwände 20 weisen insbesondere einen Abstand von 75 mm zueinander auf.

Die Grundfläche 14 weist eine sich nach vorne (entgegen des Pfeils 110, vgl. Fig. 4) verjüngende Form auf, die etwa eine Keilform darstellt. Im Bereich der vorderen Verjüngung 23 weist die Keilform eine Stumpfform auf. Die Grundfläche 14 und somit die Schablone 12 weist damit eine an die Form des Fahrradsattels 100 angelehnte Form auf.

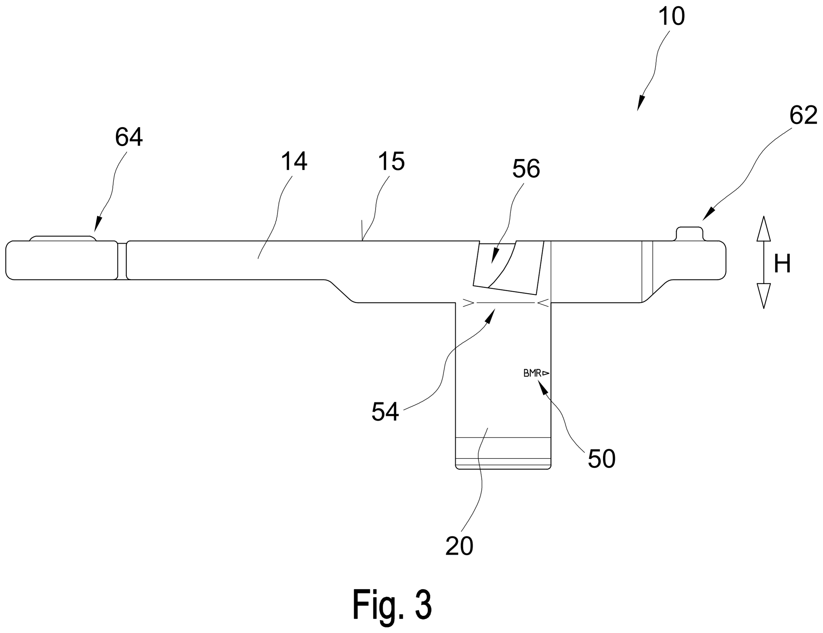

Die Unterseite 19 der Grundfläche 14 weist eine Stufe 26 zwischen einem Sattelnasenbereich 24 der Grundfläche 14 zur Verbindung mit dem Bereich der Sattelnase 104 des Fahrradsattels 100 und einem Sattelmittelbereich 28 der Grundfläche 14 zur Verbindung mit dem Zentrumsbereich 106 des Fahrradsattels 100 auf, sodass der Sattelnasenbereich 24 eine geringere Höhe (vgl. Pfeil H, Fig. 3) als der Sattelmittelbereich 28 aufweist. Bei dem Sattelmittelbereich 28 handelt es sich insbesondere um eine Basisfläche, wobei es möglich ist, dass die Einstelllehre 10 nur über diese Basisfläche mit Sattel in Verbindung kommt. Die Basisfläche 28 weist insbesondere eine Länge von 120 mm bis 80 mm, bevorzugt von ca. 100 mm auf.

Ferner ist in Längsrichtung nach hinten mit dem Sattelmittelbereich 28 ein Vorsprung 22 über eine weitere Stufe 30 verbunden, sodass auch der Vorsprung 22 eine geringere Höhe als der Sattelmittelbereich 28 aufweist. Die Stufen 26, 30 weisen eine schräge Stufenkante auf. Durch die Struktur ist eine Form der Unterseite 19 umgesetzt, die der generellen Form der Sitzfläche 102 des Fahrradsattels 100 entspricht, sodass im Wesentlichen eine Negativform vorliegt. Hierdurch ist insbesondere umgesetzt, dass die ebene Oberfläche 15 der Oberseite 18 der Einstelllehre 10 horizontal auf dem Fahrradsattel 100 angeordnet ist (vgl. Fig. 4).

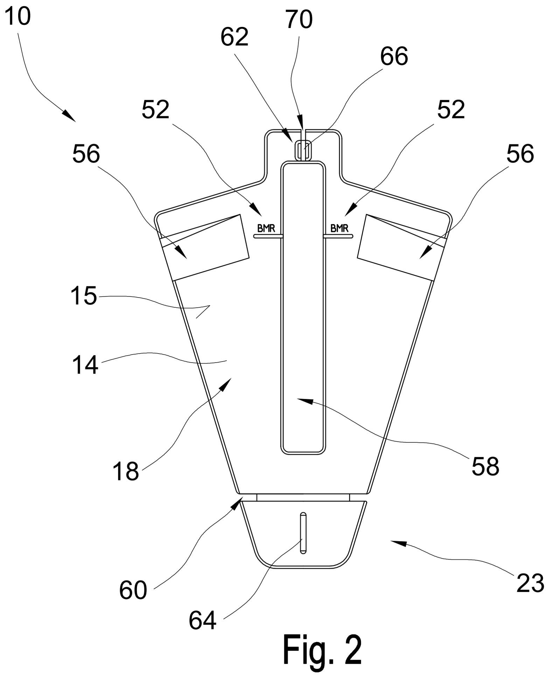

Die Oberseite 18 (vgl. Fig. 2) weist eine Aufnahme 58 in Form einer Aussparung in der Oberseite 18 zur, insbesondere formschlüssigen, Aufnahme einer Wasserwaage (nicht dargestellt) auf. Anstelle der Aufnahme 58 kann bspw. auch ein Auflageumriss zum Auflegen der Wasserwaage vorgesehen sein. Mit dieser Wasserwaage kann die Sattelneigung erfasst und insbesondere eingestellt werden.

Im Bereich der Verjüngung 23 weist die Einstelllehre 10, insbesondere die Oberseite 18, eine Lotfixierung 60 in Form einer Nut zur Fixierung eines Lots (nicht dargestellt) auf, dass sodann im Bereich des Tretlagers des Fahrrads (nicht dargestellt) pendelt. Mit dem Lot kann somit der Sattelnachsitz, insbesondere in der Saggitalebene, erfasst und insbesondere eingestellt werden.

Ferner weist die Einstelllehre 10 zwei in Längsrichtung in Reihe angeordnete, mit der Oberseite 18 der Grundfläche 14, insbesondere einstückig, verbundene Vorsprüngen 62; 64 auf. Der Vorsprung 62 weist eine Führungsaufnahmen 66 in Form einer Nut auf. Die Führungsaufnahmen 66 und/oder der Vorsprung 64 dient insbesondere als Führungsvorrichtung für eine Schnur, z. B. eine Lotschnur, um einen Fixpunkt, vorzugsweise den Gabelschaft, anzupeilen und derart die Sattelrotation einzustellen. Hierbei kann die Schnur bspw. in der Führungsaufnahmen 66 aufgenommen und über den Vorsprung 64 geführt werden. Die Führungsaufnahmen 66 und der Vorsprung 64 dienen hierbei etwa als Kimme und Korn für die Schnur. Alternativ oder zusätzlich dient die Führungsaufnahmen 66 und der Vorsprung 64 als Visier, wobei z. B. die Führungsaufnahmen 66 eine Kimme und der Vorsprung 64 ein Korn, für eine Blickpeilung durch einen Anwender dient. Die Führungsaufnahme 66 und der Vorsprung 64 bilden eine Peilvorrichtung aus. Zusätzlich oder alternativ kann die Peilung insbesondere durch einen Linienlaser vorgenommen werden.

Die Seitenwände 20 weisen seitliche Markierungen 54 als Höhenmesspunkte auf. Somit kann an diesen Markierungen 54, z. B. mittels eines Maßbands (nicht dargestellt), die Sattelhöhe gemessen und insbesondere eingestellt werden. Die dargestellte Einstelllehre 10 weist ferner beidseitig im Bereich der Seitenwände 20 in der Grundfläche 14 Messfixierungen 56 in Form von Aussparungen zur Fixierung eines Gehäuses des Maßbands auf. Durch die Anordnung der Messfixierungen 56 wird das Maßband entlang der Höhenmesspunkte geführt, sodass ein einfaches Messen möglich ist.

Darüber hinaus weisen die Seitenwände 20 und die Oberseite 18 BMR-Linien 50; 52, insbesondere nach dem Standard BMR75, auf. Es ist bevorzugt, dass sich die Basisfläche 28 in Längsrichtung ausgehend von der Position der BMR-Linie um ca. 80 mm in Richtung der Sattelnase bzw. der Verjüngung 23; und/oder um ca. 20 mm in Richtung des Sattelhecks bzw. des Vorsprungs 22 erstreckt. Es ist somit bevorzugt, dass ausgehend von der BMR-Linie in ca. 80 mm in Richtung der Sattelnase die Stufe 26 der Verjüngung 23 und/oder in ca. 20 mm in Richtung des Sattelhecks die Stufe 30 des Vorsprungs 22 beginnt.

Die Aufnahme für die Wasserwaage, die Lotfixierung, die Peilvorrichtung, die Höhenmesspunkte, die Messfixierungen und die BMR-Linien stellen Erfassungsvorrichtungen zur Erfassung der Position des Fahrradsattels 100 dar.

Figur 4 zeigt ein Fahrradsattelsystem 101 mit einem Fahrradsattel 100 mit dessen Sitzfläche 102 die Einstelllehre 10 gemäß Figuren 1-3 zur Einstellung des Fahrradsattels 100, insbesondere der Sattelhöhe, der Sattelneigung, des Sattelnachsitzes und/oder der Sattelrotation, verbunden ist.

## Patentansprüche

1. Einstelllehre (10) für einen Fahrradsattel (100), mit
einer Schablone (12) zur definierten Verbindung mit dem Fahrradsattel (100),
wobei die Schablone (12) eine Grundfläche (14) zur Auflage auf die Sitzfläche des Fahrradsattels (100), und mit einer Unterseite der Grundfläche (14) verbundene Seitenwände zur beidseitigen äußeren Anlage an die Fahrradsattelseiten (108) aufweist; und
wobei die Einstelllehre (10) eine Erfassungsvorrichtung zur Erfassung der Position des Fahrradsattels (100) aufweist.

2. Einstelllehre (10) nach Anspruch 1, **dadurch gekennzeichnet, dass** die Erfassungsvorrichtung eine Referenzmarkierung und/oder eine Messvorrichtung und/oder eine Ausrichtungsvorrichtung aufweist.

3. Einstelllehre (10) nach Anspruch 1 oder 2, **dadurch gekennzeichnet, dass** zwischen der Unterseite der Grundfläche (14) und den Seitenwänden ein Aufnahmeraum (21) zum formschlüssigen Aufschieben der Schablone (12) auf den Fahrradsattel (100) ausgebildet ist.

4. Einstelllehre (10) nach einem der Ansprüche 1-3, **dadurch gekennzeichnet, dass** die Schablone (12) eine sich verjüngende, bevorzugt zuspitzende Form, aufweist.

5. Einstelllehre (10) nach einem der Ansprüche 1-4, **dadurch gekennzeichnet, dass** die Seitenwände einen Abstand von 50 mm bis 100 mm, bevorzugt von 65 mm bis 85 mm, besonders bevorzugt von ca. 75 mm zueinander aufweisen, und/oder
**dadurch gekennzeichnet, dass** der Abstand der Seitenwände verstellbar ist.

6. Einstelllehre (10) nach einem der Ansprüche 1 bis 5, **dadurch gekennzeichnet, dass** die Einstelllehre (10) eine Peilvorrichtung, z. B. Kimme und Korn, zum Anpeilen eines Fixpunkts, vorzugsweise des Gabelschafts aufweist.

7. Einstelllehre (10) nach einem der Ansprüche 1 bis 6, **dadurch gekennzeichnet, dass** die Einstelllehre (10) eine Aufnahme (58) und/oder einen Auflageumriss für eine Wasserwaage aufweist, und/oder
**dadurch gekennzeichnet, dass** die Einstelllehre (10) eine Lotfixierung (60) zur Befestigung eines Lots aufweist.

8. Einstelllehre (10) nach einem der Ansprüche 1 bis 7, **dadurch gekennzeichnet, dass** die Einstelllehre (10) einen Höhenmesspunkt zum Messen der Sattelhöhe aufweist, und/oder
**dadurch gekennzeichnet, dass** die Einstelllehre (10) eine Messfixierung (56) zur Fixierung eines Längenmessgeräts, insbesondere eines Maßbands, aufweist.

9. Einstelllehre (10) nach einem der Ansprüche 1 bis 8, **dadurch gekennzeichnet, dass** die Einstelllehre (10) eine Referenzmarkierung, insbesondere eine BMR-Markierung (50), aufweist.

10. Einstelllehre (10) nach einem der Ansprüche 1 bis 9, **dadurch gekennzeichnet, dass** die Schablone (12) ein Markierungsfenster, insbesondere zu definierten Anbringung einer Markierung auf dem Fahrradsattel (100), aufweist.

11. Einstelllehre (10) nach einem der Ansprüche 1 bis 10, **dadurch gekennzeichnet, dass** eine Unterseite der Schablone (12), insbesondere der Grundfläche (14), eine Stufe (26, 30) aufweist, sodass der Bereich der Verjüngung eine geringere Höhe aufweist als der gegenüberliegende Bereich.

12. Einstelllehre (10) nach einem der Ansprüche 1 bis 11, **dadurch gekennzeichnet, dass** die Einstelllehre (10) eine Länge von 200 mm bis 120 mm, bevorzugt von 180 mm bis 140 mm, besonders bevorzugt von ca. 150 mm aufweist, und/oder
**dadurch gekennzeichnet, dass** die Einstelllehre (10) eine Breite von 150 mm bis 90 mm, bevorzugt von 130 mm bis 100 mm, besonders bevorzugt von ca. 100 mm aufweist, und/oder
**dadurch gekennzeichnet, dass** die Einstelllehre (10) aus Kunststoff hergestellt ist.

13. Einstellsystem für einen Fahrradsattel (100), mit
einer Einstelllehre (10) nach einem der Ansprüche 1 bis 12, und
mindestens einem mit der Einstelllehre (10) verbundenen Messinstrument, vorzugsweise
**dadurch gekennzeichnet, dass** als Messinstrument mit der Einstelllehre (10) ein Maßband, eine Wasserwaage, ein Lot und/oder ein Laser, insbesondere ein Laser-Distanzmesser und/oder ein Linienlaser, z. B. ein Kreuzlinienlaser, verbunden ist.

14. Fahrradsattelsystem (101) mit
einem Fahrradsattel (100), und
einer Einstelllehre nach einem der Ansprüche 1 bis 12 oder einem Einstellsystem nach Anspruch 13, wobei die Einstelllehre (10) formschlüssig mit dem Fahrradsattel (100) verbunden ist.

15. Fahrradsystem mit
einem Fahrrad, und
einem mit dem Fahrrad verbundenen Fahrradsattelsystem (101) nach Anspruch 14, wobei mindestsens ein mit der Einstelllehre (10) verbundenes Messinstrument eingerichtet ist die Position des Fahrradsattels (100) relativ zum Fahrrad zu erfassen, und wobei bevorzugt mindestens ein Messinstrument eingerichtet ist:
- die Ausrichtung des Fahrradsattels (100), insbesondere die Sattelrotation, relativ zum Fahrrad anzuzeigen;
- den Abstand des Fahrradsattels (100) zum Tretlager zu messen;
- den horizontalen Abstand des Fahrradsattels (100) zum Tretlager anzuzeigen und/oder zu messen;
- die horizontale Ausrichtung des Fahrradsattels (100) zu erfassen; und
- den Abstand des Fahrradsattels (100) zum Lenker zu messen.
